# EUROPEAN PATENT APPLICATION

(11) **EP 0 635 836 A1**
(43) Date of publication of application: **25.01.1995**
(21) Application number: 94111168.4
(22) Date of filing: 18.07.1994
(51) Int. Cl.: G11B 33/14, G11B 33/12

(54) **Magnetic disk apparatus**

(30) Priority: 22.07.1993 JP 181078/93
(71) Applicant: HITACHI, LTD., Chiyoda-ku, Tokyo 101 (JP)
(72) Inventor: Ohdaira, Toshio, Odawara-shi (JP); Ogawa, Takuji, Odawara-shi (JP); Takahashi, Tsuyoshi, Odawara-shi (JP); Moriyama, Kanichi, Hadano-shi (JP); Mitarai, Hideo, Odawara-shi (JP); Kasugai, Hitoshi, Hiratsuka-shi (JP); Takeda, Yasuyuki, Minamiashigara-shi (JP)
(74) Representative: Patentanwälte Beetz - Timpe - Siegfried Schmitt-Fumian - Mayr

(57) **Abstract**

A magnetic disk apparatus includes head disk assembly units (60) which have a head disk assembly (HDA) (12), an electronic circuit portion (13) which controls the HDA (12), and a fan (14) which cools the HDA (12) and the electronic circuit portion (13), and a plurality of separate frames (10). The HDA includes a magnetic disk (41) which is rotatably supported around a spindle (42), a magnetic head (43) which records data on the magnetic disk (41) and reads out data from the magnetic disk (41), a head arm (44) which supports the magnetic head (43), a device (46, 47) which moves the head arm (44) to a predetermined position on the magnetic disk (41), a magnetic circuit (49, 50) which drives the device (46, 47), and a motor (40) which rotates the spindle (42). The HDA unit (60) is separated by a wall (61a) having an opening, with the HDA (12) and the electronic circuit portion (13) installed on one side, and the fan (14) installed on the other side of the wall (61a). Two or more HDA units (60) are accommodated in one frame (10).

## Description

### BACKGROUND OF THE INVENTION

### Field of the Invention

The present invention relates to a magnetic disk apparatus used as an external storage device, and, in particular, to a magnetic disk apparatus having proper configuration and arrangement of its internal devices, and which is excellent for cooling its devices. Description of the Related Art

As disclosed in Japanese Patent Unexamined Publication No. 2-098197, in conventional apparatus, there are eight HDA units incorporated in one housing. Here, the term HDA unit refers to an assembly comprising a head disk assembly (hereinafter referred to as HDA) including a magnetic disk, a magnetic head, a head arm supporting the magnetic head, a magnetic circuit, and motor for rotating a spindle; an electronic circuit portion which controls the HDA; and a fan which cools the HDA and the electronic circuit portion.

Each HDA unit comprises one HDA and electronic circuit portion, comprising two printed circuit boards (PCB), which control the HDA, each of which is accommodated in one box (hereinafter referred to as HDU-BOX). The HDA unit has a tunnel-like box which accommodates the HDA and a chimney-like box which accommodates the PCB. Cooling of the HDA is performed by passing air horizontally in the tunnel which accommodates the HDA, while cooling of the PCB is performed by passing air vertically.

The housing which incorporates these HDU-BOXES has a partition which divides it into two sections. Fans are facing each of the HDAs and are mounted to the partition. Insertion with the HDA unit into the housing forms a tunnel which envelopes the HDA and an air flow path. The PCB cooling is achieved by mounted two fans near the center of the housing such that these fans produce vertical air flow. The structure is provided such that insertion with the HDA unit in the housing results in insertion with the PCB in the HDA unit in the vertically flowing air, thereby cooling the PCB.

One electric power source which supplies electricity to the HDA unit supplies electricity to four HDA units. This means that two power sources are required for eight HDA units. The two power sources are placed on the upper portion of the housing, with cables provided to supply power to the four HDA units below from each power source.

In recent years, there has been a rapid reduction in the size of the HDA, which has led to an increase in the number of HDAs incorporated per apparatus. As described above, with regard to conventional apparatuses and internal device configuration, there has been a need for providing an assembly mounting configuration which is more simple and more economical and which has the structure distinguished from that of conventional units.

In the above-described prior art, the HDA units (hereinafter referred to as HDU) have been so structured as being individually fixed to a rail of the frame for fixing the HDUs. This increase in the number of HDUs to be mounted due to the reduced size of the HDA results in a proportionate increase in the number of HDU mounting members, including the foregoing rail for fixing the HDU, and manpower, which may increase the cost of the apparatus.

In addition, since the HDU is so constructed as being fastened to the frame by screws and the like, the frame does not have enough rigidity to withstand outside vibrations such as earthquakes, as a result of this increase in the number of HDUs to be mounted.

Further, since the power sources are provided on the uppermost portion of the housing, it is difficult to utilize the cooling air from the HDU, making it necessary to provide a cooling fan for each of the power sources.

The cables are mounted as parts to be mounted in the housing, such as power supply cables from the power source to the HDU, and interface cables from a host unit. Therefore, it is necessary to mount all of them in the HDU unmounted portions, even when only a few of about four HDUs need to be mounted.

### SUMMARY OF THE INVENTION

In light of an increase in the number of HDUs mounted, the object of the present invention is to provide a magnetic disk apparatus having a simplified and highly economical mounting structure made possible by an assembly mounting structure achieved by mounting the HDU in an HDU-BOX by means of a leaf spring, with the HDU-BOX fixed to a frame. It is designed to prevent a reduction of the frame rigidity by so structuring the unit as allowing slight sliding of the HDU in the HDU-BOX.

Another object of the present invention is to provide a magnetic disk apparatus which is capable of eliminating some housing mounting cables by taking in a portion of the interface cable in the HDU-BOX.

Still another object of the present invention is to reduce the cost of the apparatus by discontinuing the use of the fans for cooling the power source, which is achieved by arranging a power source at the downstream of the air flow path for HDU cooling air which is generated in the HDU-BOX, and a small diameter hole for cooling in an outer wall of the power source, so that the power source is cooled by utilizing the HDU cooling air flow.

To these ends, there is provided according to the present invention, a magnetic disk apparatus comprising an HDA unit having a head disk assembly (hereinafter referred to as HDA) which includes a magnetic disk rotatably supported around a spindle, a magnetic head which records data on the magnetic disk and reads out this data from the magnetic disk, a head am which supports this magnetic head, means which moves this head arm to a predetermined position on the magnetic disk, a magnetic circuit which drives this means, and a motor which rotates the aforementioned spindle; an electronic circuit portion which controls the HDA; and a fan which cools the HDA and the electronic circuit portion. The HDA unit is separated by a wall having an opening, with one side thereof having mounted thereto the HDA and the electronic circuit portion, and the other side thereof having mounted thereto the fan. In addition, there is provided a plurality of independent frames, with one of the frames accommodating and incorporating two or more HDA units.

One embodiment of the magnetic disk apparatus is so constructed as being able to install HDA units in groups of four up to a maximum of 32 HDAs per apparatus.

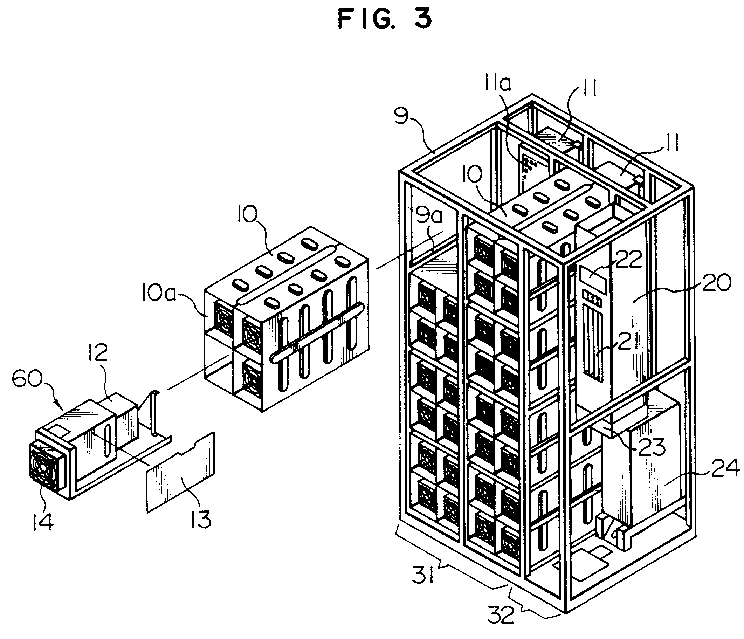

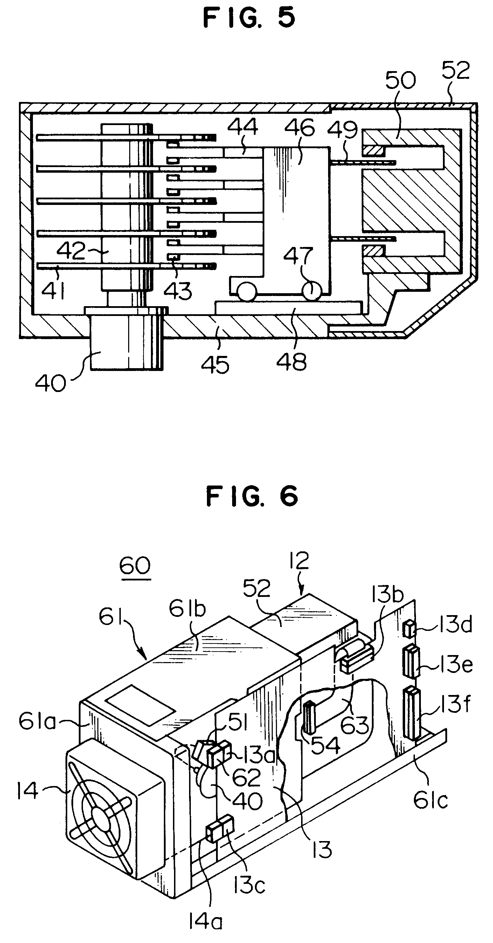

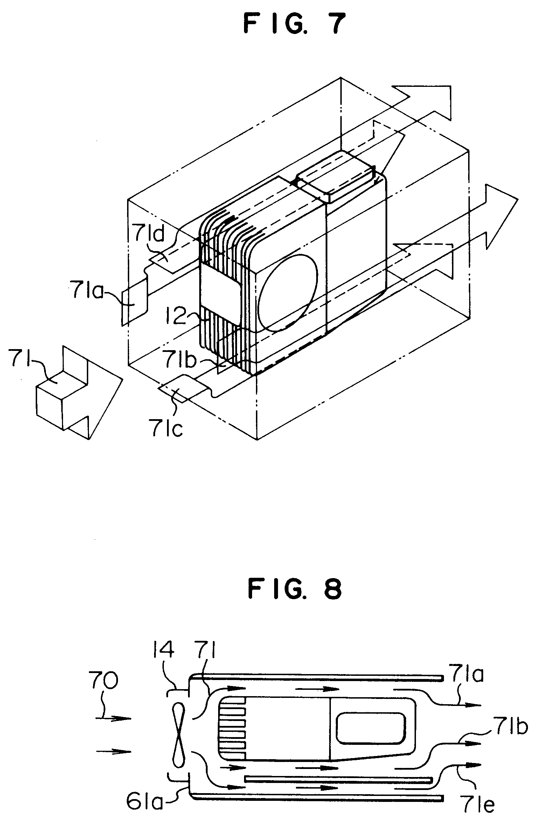

On one side of a vertical wall having a hole for the fan, there are mounted one HDA and an electronic circuit portion comprising a PCB (printed circuit board) which controls the HDA, while on the other side thereof, there is mounted the fan. This arrangement makes up one HDU (see Fig. 6). In the present invention, four HDUs are put in two rows and columns in each of the cylindrical HDU-BOXES, which has a wall separating each of the four HDUs (see Fig. 3, reference numeral 10). A path through which air flows horizontally to cool the HDAs and the electronic circuit portions are provided separately for each HDU in the HDU-BOXES (see Fig. 8), with one fan cooling one HDA and one electronic circuit portion.

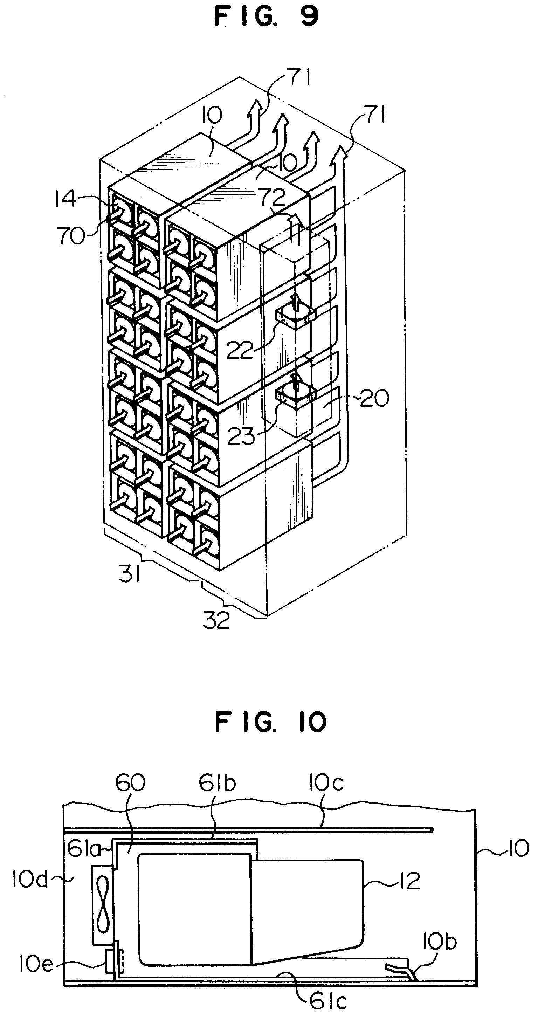

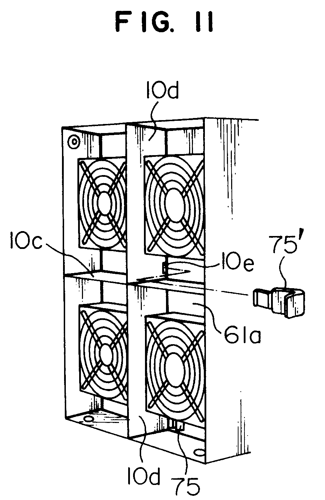

There is a vertical and horizontal gap of about 0 mm to 2 mm between the outside dimension of the HDU and inside dimension of the air stream path provided separately for each HDU in the HDU-BOXES, in order to allow easy mounting of the HDU to the HDU-BOX and based on the HDU play in the HDU-BOX. There is provided a projection for inserting the bottom surface of the HDU to the inner side of the structural surface of the HDU-BOX which faces the HDU bottom surface (see Fig. 10). In addition, a square hole is provided for mounting a leaf spring to the front portion of the HDU-BOX, with a removable leaf spring provided with respect to the HDU vertical wall in such a predetermined bent state which develops forces which press the HDU to the projection at the inner side of the foregoing HDU-BOX (see Fig. 11). This allows the HDU to be mounted to the HDU-BOX without the use of fixing screws.

Further, when outside vibrations such as earthquakes occur, the HDU slides slightly in the HDU-BOX, which results in the dumping mass effect. For this reason, the HDU is not adversely affected, even though the frame rigidity is not increased.

The HDU-BOX (see Fig. 3, reference numeral 10) is either made of iron material or magnetic material to prevent malfunctioning caused by electromagnetic noise interference which occurs between the four HDUs in the HDU-BOX.

The HDU-BOX is formed into a thin plate of about 1 mm for reducing its weight, with the outer wall circumference reinforced by being drawn, tight-bended, and the like to prevent deformation thereof.

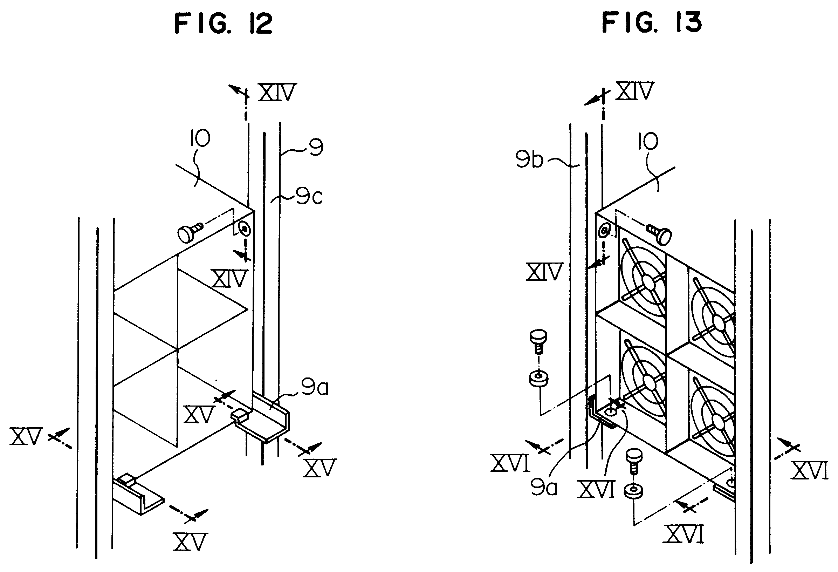

The HDU-BOX is placed on a plastic sheet, which is provided on an upper surface of the frame's rail for mounting the HDU-BOX, and plastic washers are provided at the portion for securing the HDU-BOX to the frame with screws. As a result, ground insulation between the HDU-BOX serving as DC ground and frame serving as AC-ground is carried out, thereby preventing changes in the AC-ground level from affecting the data-write/read-out signals at the HDU (Figs. 12 through 16).

A power source which supplies power to the HDU which has already been mounted in the HDU-BOX is provided at the downstream of the air flow path in the HDU-BOX. A small-diameter hole for cooling the inside of the power source is formed in the outer wall of the power source. These allow cooling of the power source by utilizing the HDU cooling air which is produced in the HDU-BOX.

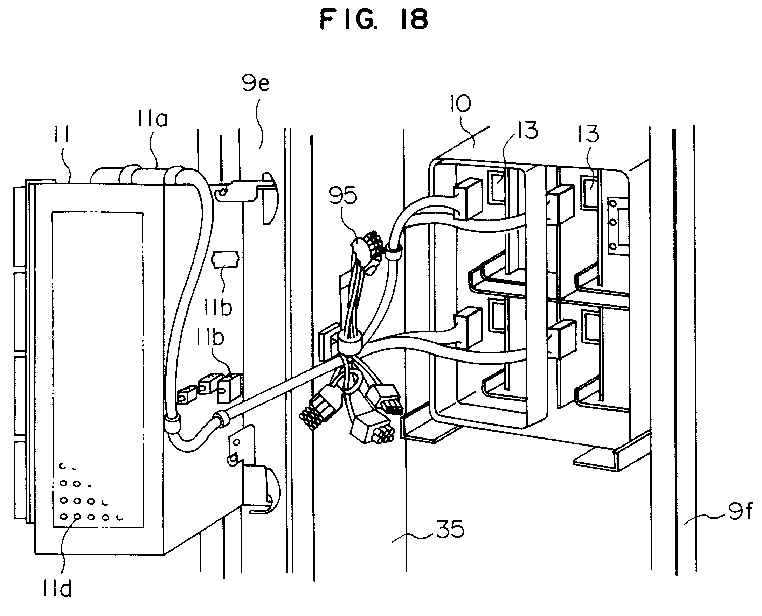

The power source is provided on the frame by a rotating hinged structure, and a rotating lock lever is provided for the power source, so that during general use of the unit, it is accommodated in a predetermined location, and during maintenance, the power source is opened, thereby allowing maintenance of the electronic circuit portion in the HDU (see Fig. 18).

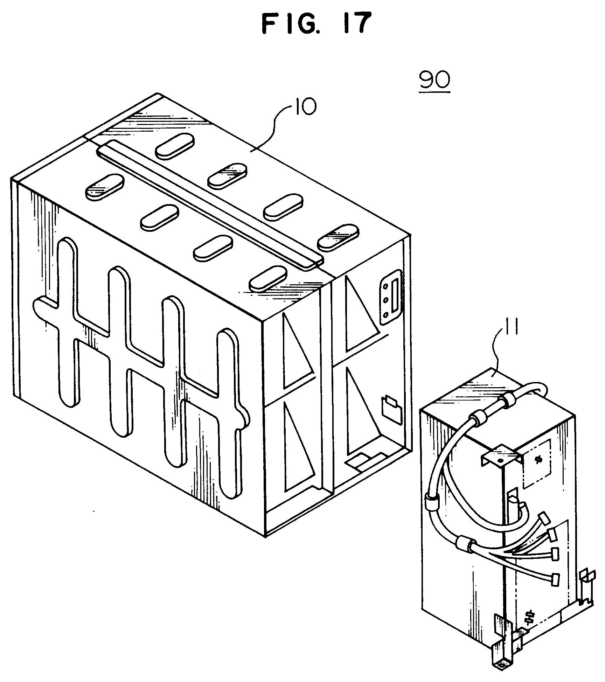

The structure, for extension of four HDAs as a unit, includes one HDU-BOX and one power source. It is called an additional DKU (see Fig. 17). An area in the frame for installing DKU structure, which has two rows and four columns, is provided. This is called drive section. In order to obtain the apparatus overturning angle, that is in order to lower the center of gravity to prevent the apparatus from overturing, extension is carried out successively from bottom to top in the direction of the height.

The transformer in the additional DKU needs to be switched in accordance with the voltage/frequency, but, in the present invention, a voltage/frequency switching connector (see Fig. 18, reference numeral 95), previously set as a device at all of the areas for installing the foregoing additional DKU is provided as a component part of the unit. When the additional DKU is installed, the structure is such as to allow insertion of the above-described switching connector into the connector of the power source at the predetermined location, so that one type of DKU is capable of dealing with various voltages/frequencies.

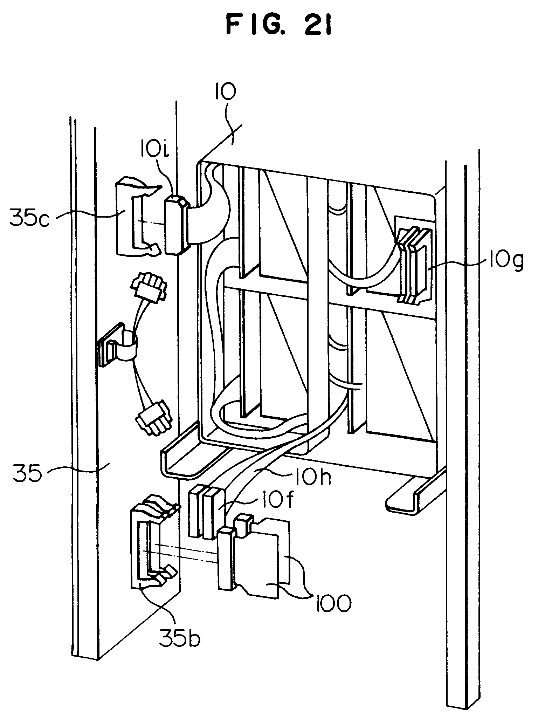

In the present invention, a string controller section which controls the drive section consisting of an additional DKU is also included in one magnetic disk apparatus. Data transmission cable connection the control circuit section of the string controller section and HDUs, in the string controller section, are provided to the side of the lowest level DKU, with a terminal resistance provided in the terminal connector (see Fig. 21, reference numeral 100).

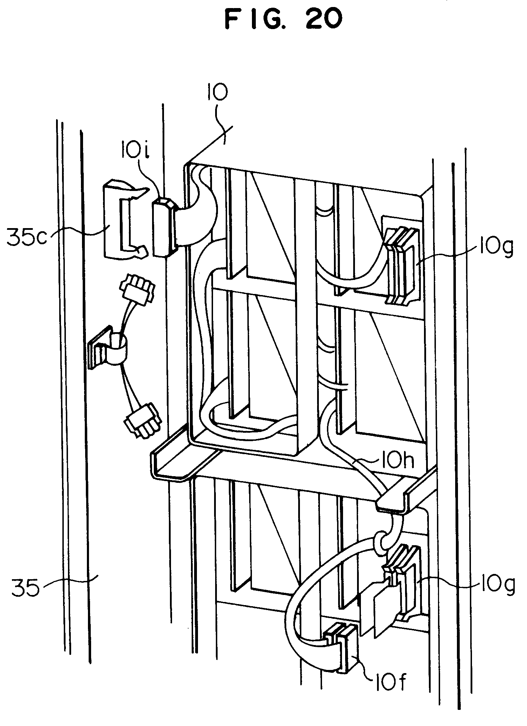

On the other hand, the data transmitting cable of the drive section, which is a continuous cable having two end connectors, is mounted in the HDU-BOX, in each DKU. The connector taken away from somewhere along the foregoing cable is connected to the electronic circuit portion of each of the HDUs (see Fig. 20). When installing the first lowest level DKU structure, the terminal resistance is removed from the connector of the cable extending from the control circuit section, and then one of the connectors of the DKU structure is connected to the foregoing connector, afterwhich the foregoing terminal resistance is mounted to the other connector.

Further, when installing the second additional DKU, the terminal resistance is removed from the other connector of the first DKU, and this connector is connected to one connector of the second additional DKU, with other connector being mounted to the terminal resistance.

As to a plurality of additional DKUs, the above-described connector connection is repeated successively so that all of the additional HDUs are connected to the control circuit. This allows the data transmission cable of the drive section to become a component part of the additional DKU, thereby saving costs as compared to standard mounting of the above-described cables to the unit.

Current is supplied from the main power source of the string controller section to the power source of the additional DKU by a wiring arrangement achieved by removing a supply connector from somewhere along the supply cable extending from the main power source and installing it at previously determined location on the additional DKU, and, upon installation of the additional DKU, inserting the receiving connector of the power source into the supply connector. This simplifies the installation, and has no effect upon other power sources when there is replacement due to power failure.

The additional DKU is installed successively from bottom to top in the direction of the height, so that the cables are distributed vertically. These can be distributed together at a metallic or plastic cable duct and forming a cable distribution. Consequently, the time required for assembly can be reduced.

In the HDU including an HDA, an electronic circuit portion, and a fan, the fan is mounted on the vertical wall having a fan opening, independently carries out highly efficient cooling by means of the horizontal air flow path formed by a partition, while it is being incorporated in each of the four HDUs having the fan mounted facing the HDA and the electronic portion, each HDU being put in a prismatic HDU-BOX having partitions which form two rows and two columns.

The power source which has a small-diameter hole at the outer wall for cooling its inside, the power being provided at the downstream of the horizontal air flow path in the HDU-BOX, is cooled by the amount of air equivalent to that for four units, after the HDUs have been cooled. The cooling air has its temperature increased from about 3°C to 5°C due to HDU cooling and outside air, but since the power source parts have good temperature characteristics, this increase in temperature does not cause any problem.

In the power source of an additional DKU in which switching needs to be carried out in accordance with the voltage/frequency, a switch connector is used as a component part of the unit, which is previously mounted at all of the positions the additional DKUs are to be mounted, so that one type of additional DKU is capable of dealing with various voltages/frequencies.

### BRIEF DESCRIPTION OF THE DRAWINGS

Fig. 1 is a perspective view of the front side of a magnetic disk apparatus in accordance with one embodiment of the present invention;
Fig. 2 is a perspective view of the back side of the magnetic disk apparatus of Fig. 1;
Fig. 3 is a perspective view of the apparatus of Fig. 2 as seen from the back side;
Fig. 4 is a perspective view of the interior of the apparatus of Fig. 1 as seen from the front side;
Fig. 5 is a cross sectional view of the HDA used in the magnetic disk apparatus of one embodiment of the present invention;
Fig. 6 is a perspective view of an HDU used in the magnetic disk apparatus of one embodiment of the present invention;
Fig. 7 is a perspective view illustrating the flow of cooling air of the HDU of Fig. 6;
Fig. 8 is a plan sectional view illustrating the flow of cooling air of the HDU of Fig. 6;
Fig. 9 is a perspective view of the flow of cooling air of the entire magnetic disk apparatus of one embodiment of the present invention;
Fig. 10 is a transverse sectional view illustrating the mounting of the HDU of Fig. 6;
Fig. 11 is a perspective view illustrating the mounting of Fig. 10;
Fig. 12 is a perspective view of illustrating the mounting of an HDU-BOX of the magnetic disk apparatus of one embodiment of the present invention, as seen from the front;
Fig. 13 is a perspective view of the back side of Fig. 12;
Fig. 14 is a partial sectional view taken along line XIV-XIV of Figs. 12 and 13 for illustrating the mounting of the HDU-BOX;
Fig. 15 is a partial sectional view taken along line XV-XV of Fig. 12 for illustrating the mounting of the HDU-BOX;
Fig. 16 is a partial sectional view taken along line XVI-XVI of Fig. 13 for illustrating the mounting of the HDU-BOX;
Fig. 17 is a perspective view of a structure of an additional DKU of one embodiment of the present invention;
Fig. 18 is a perspective view illustrating connection of a supply cable to the HDU-BOX from the power source of the magnetic disk apparatus of one embodiment of the present invention;
Fig. 19 is a perspective view illustrating the connection of the supply cable to the power source of the magnetic disk apparatus of Fig. 18;
Fig. 20 is a perspective view illustrating connection of a data transmitting cable between the HDU-BOXES of one embodiment of the present invention;
Fig. 21 is a perspective view illustrating the connection of the data transmitting cable between the magnetic disk apparatus and the HDU-BOX; and
Fig. 22 illustrates the main wiring of the magnetic disk apparatus of one embodiment of the present invention.

### DETAILED DESCRIPTION OF THE PREFERRED EMBODIMENTS

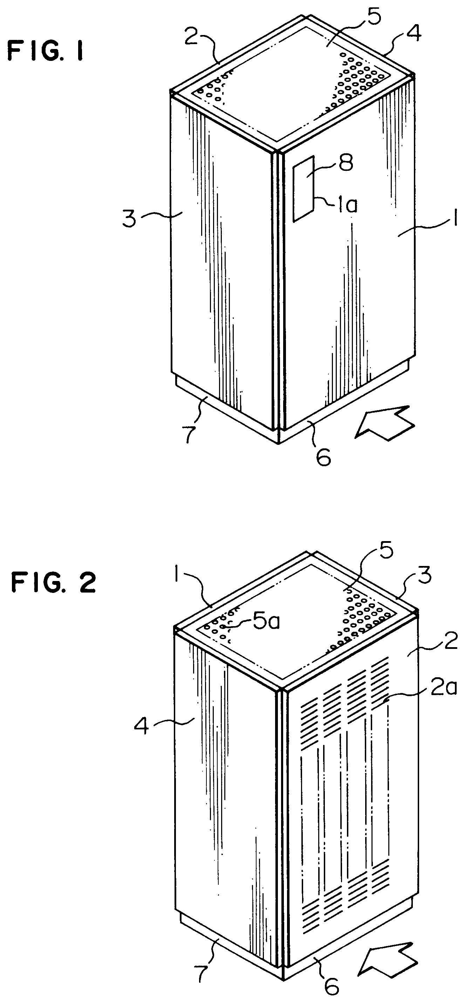

One embodiment of the present invention will be described below with reference to Figs. 1 through 22.

Fig. 1 is a perspective view of a magnetic disk apparatus of the present invention, as seen front side.

An operator panel 8 mounted on a frame described later is provided on the upper portion of each window 1a of a front door 1. A switch and display lamp on the operator panel permits verification of the apparatus functioning and operating condition. A rear door 2 is provided at the back of the apparatus (see Fig. 2), which rear door is capable of being opened and closed as the front door 1. During maintenance, it is opened. Side covers 3 and 4 are mounted on the sides of the apparatus. Skirts 6 are each provided at the front and rear of the lowest portion of the apparatus, and skirts 7 are each provided on the sides of the apparatus. They are each provided along the circumference of the apparatus. In installing beside the present apparatus another apparatus which can be linked thereto, the foregoing side covers 3 or 4 and then the skirts 7 are removed, afterwhich the apparatus are linked with connecting bolts, each apparatus being in contact with each other. Here, the side covers 3 and 4, and the skirts 7 are installed by being moved to the side opposite the linking side of the other apparatus.

Fig. 2 is a perspective view of the apparatus of the present invention, as viewed from the back. The devices in the apparatus are cooled by air. The air is sucked by a plurality of air-introducing louvers 2a which are provided in the rear door 2. Then, a filter (not illustrated), which is provided on the inner side of the louvers 2a removes the dust, afterwhich the devices in the unit's interior is cooled. The air is then discharged by a top cover 5 at the uppermost portion of the apparatus. The top cover 5 has a plurality of air-discharging holes 5a measuring 4.5 mm in diameter, which allow easy discharge of the cooling air in the apparatus.

Fig. 3 is a perspective view of the back side of the unit, in which the unit's interior is shown by the removal of the front door 1, the rear door 2, the side covers 3 and 4, the top cover 5, the skirts (at the front and rear) 6, and the skirts (at the sides) 7, as shown in Fig. 2. The devices in the apparatus's interior are all installed in frame 9. The present figure shows all of the DKUs (described later) mounted.

The HDU-BOX 10 of the left upper portion is shown just before it is installed in the frame 9. In the same way, an HDA 12 and an electronic circuit portion 13 at the left lower portion of the foregoing HDU-BOX 10 is shown just before it is installed.

HDU 60, which consists of the HDA 12, the electronic circuit portion 13 and a fan 14, is inserted into and mounted in a prismatic duct formed by dividing the HDU-BOX 10 into two rows and two columns so as to surround the HDU 60 by the duct.

End portion 10a of the HDU-BOX 10 is so positioned as being in contact with the filter surface (not illustrated) mounted on the above-described rear door 2, so that the warmed air in the unit does not flow around from the end portion 10a of the HDU box, or such that only the outside air which passes the filter is absorbed.

At the rear portion of the present Figure, electric power sources 11 each are provided facing each of the HDU-BOXES 10, the power sources 11 each having a plurality of small-diameter holes 11a for cooling the inside thereof. The outside air which is sucked in by the fan 14 cools the HDA 12 and the electronic circuit portion 13, afterwhich it passes through the small-diameter holes 11a for cooling the inside of the power source. Then, it passes through the air-discharging holes 5a in the above-described top cover at the upper portion of the unit, and is discharged outside the apparatus.

In the present invention, eight DKUs, each of which consists of the foregoing HDU-BOX 10 and power source 11, are installed, this area where the DKUs are installed being called a drive section 31. (The DKU will be described later in detail.)

On the other hand, the area on the right side of the present Figure is called a string controller section 32. This section controls the drive section 31 which contains the DKUs, each of which consists of the additional HDU-BOX 10 and the power source 11; displays its condition; supplies power to it; and the like.

A main power source 24 and a logic unit 20 are provided in the string controller section 32. The interior of the logic unit 20 is cooled by using the fans 22 and 23 mounted on the upper and lower portions and a filter for removing dust (not illustrated) provided on the lowest portion of the logic unit 20 to make the cooling air flow upwards.

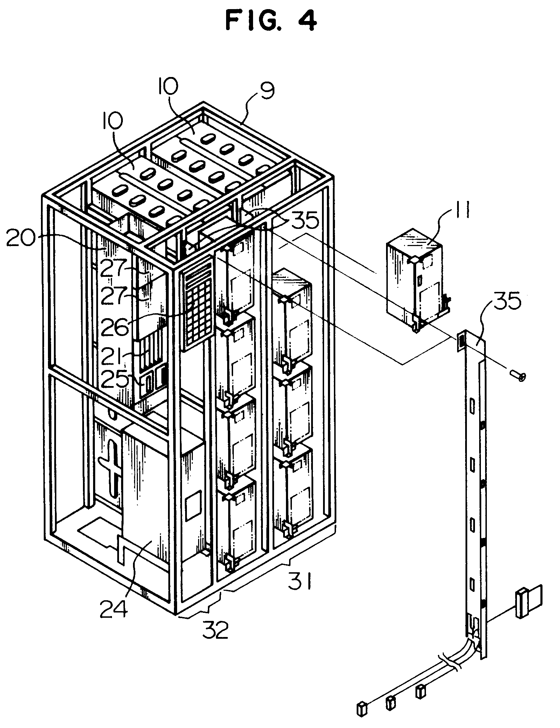

Fig. 4 is a perspective view of the front side of the unit, in which the front door 1, the rear door 2, the side covers 3 and 4, the top cover 5, the skirts (at the front/rear), and skirts (at the sides), of Fig. 1. have been removed to show its interior. Since the devices which form the interior of the apparatus are the same as those of Fig. 3, the devices which can be seen from the front side of the apparatus will be described.

The power source 11 located at the right upper portion of the drive section 31 is shown just before it is installed to the frame 9. A cable duct 35 is shown at position 35' to make its shape clear. The logic unit 20 in the string controller section 32 has also mounted thereto, in addition to the fans 22 and 23, and the dust removing filter (not illustrated) provided at the lowest portion of the logic unit 29, a control circuit section 21 for controlling the write/read-out signal generated to the drive section 31, a direct current power source 25 for supplying power to the control circuit section 21, and a power control substrate for controlling the power sources of the drive section 31.

The front left upper portion has a display panel 26 which sets and displays the operating state of the electronic circuit portion 13 of the drive section 31 and the foregoing control circuit section 21, the display panel 26 being so mounted as being rotatable in the horizontal direction.

As described above, each of the devices operates in the predetermined manner by being connected with each of the cables which is described later.

Next, the arrangement of the devices in the interior of the apparatus will be described.

Fig. 5 is a cross sectional view of the HDA 12 (head disk assembly) illustrated in Fig. 3.

A spindle 42 of the HDA 12 is directly connected to a motor 40, with a plurality of magnetic disks 41 each mounted on the upper portion and the motor 40 fixed to a base 45.

The plurality of magnetic heads 43 are each supported by a plurality of head arms 44 on their front ends. The head arms 44 are supported by a carriage 46, which carriage is linearly movably supported on ball bearings 47. The ball bearings 47 are guided by a rail 48. Coils 49 are mounted to the other end of the carriage 46, and around the coils 49, there is provided a magnetic circuit 50 which is mounted on the base 45. The coils 49 and the magnetic circuit 50 form the so-called voice coil motor (hereinafter referred to as VCM). When current flows through the coils 49, a thrust occurs therein.

The above-described arrangement allows the magnetic heads 43 to move linearly in the horizontal direction, such that they can be placed on the desired track of the magnetic disks 41 which rotate by the motor 40. This positioning operation is carried out by servo control. The positioned magnetic heads 43 function as storage devices which write data on the magnetic disk 41 and read out data thereon.

Fig. 6 shows an appearance of the HDU 60, consisting of the HDA 12, the electronic circuit portion 13, and the fan 14, illustrated in Fig. 3.

An HDU bracket 61 is made of aluminum plate only to reduce its weight. It may be made of iron plate if weight reduction is not so important. The HDU bracket 61 is so structured as having a vertical wall 61a which has a hole for mounting the fan and divides the upstream and downstream of the fan, a gate-shaped portion 61b for fixing the HDA 12, the foregoing vertical wall 61a, and a base section 61c which supports the gate-shaped section 61b, which are all welded together, caulked, and the like, into an integral structure.

The HDU bracket 61 is so structured as having an HDA 12, an electronic circuit portion 13, and a fan 14 mounted thereto, that it serves as a unit for writing data into and reading out data from the HDA 12.

A motor cable connector 51 which drives the motor extends from the motor 40 of the HDA 12, while a read/write cable connector 54 extends from the cover 52. The read-write cable connector 54 is so designed as having integrated a VCM drive cable connector and an interface cable connector which transmits data write/read out signals and HDA operating signals. These cable connectors are connected to each of the connectors 13a and 13b of the electronic circuit portion 13 mounted on the side of the HDA 12 by means of a motor cable 62, and read/write cable 63. The above-described cables allow the HDA to be driven and to send data to and from the HDA.

The fan 14 has its fan cable 14a connected to a connector 13a of the electronic circuit portion 13 for operation. It cools the HDA 12 and the electronic circuit portion 13. The above-described HDU 60 is operated by connectors 13d, 13e and 13f of the electronic circuit portion 13, which supply power and transmits data write/read-out signals and HDA operating signals.

Fig. 7 is a perspective view illustrating the flow of cooling air of the HDA 12 in the HDU 60; while Fig. 8 is a sectional view illustrating the flow of cooling air of the HDA 12 and the electronic circuit portion 13 in the HDU 60.

Outside air 70 which is sucked in by the fan 14, which is mounted in an opening in the vertical wall 61a of the HDA bracket 61, the wall separating the upstream and downstream of the fan, becomes cooling air 71 in the HDU, which is discharged and collides with the HDA 12. It is, then, divided into cooling air 71a, 71b, 71c, 71d, and 71e, which results in efficient cooling of the HDA 12 and the electronic circuit portion 13. The cooling air 71a, 71b, 71c, 71d, and 71e in the HDU cools the power source 11, illustrated in Fig. 3 (but not illustrated in figs. 7 and 8), afterwhich it is discharged outside the apparatus from the top cover air-discharging hole 5a.

Fig. 9 is a perspective view illustrating a typical flow of cooling air in the apparatus described above. The outside air 70 is sucked into the apparatus by the fan 14, each of which are mounted in the HDU 60 (not illustrated in the present figure), the HDU 60 being installed in the HDU-BOX 10 in rows of 2 and columns of 8. The outside air 70 is discharged by the fan 14 and becomes cooling air 71. It cools the HDU 60, each of which are installed in the HDU-BOX 10 (not illustrated in the present figure), and the power source 11 (also not illustrated herein). Then, this cooling air becomes ascending current, which is discharged outside the apparatus from the top cover air-discharging hole 5a.

On the other hand, the logic unit 20 in the string controller section is cooled by air sucked in from below the logic unit 20 by means of the fans 22 and 23, mounted at the upper and lower portion of the logic unit 20, afterwhich this air 72 is discharged outside the apparatus from the top cover air-discharging hole 5a.

Fig. 10 is a transverse cross sectional view illustrating the mounting of the HDU 60 to the HDU-BOX 10, in which the top first row of the HDU-BOX 10 is not shown.

Like Fig. 10, Fig. 12 is a perspective view for illustrating the mounting of the HDU 60 to the HDU-BOX 10, in which only the area around the fan 14 is shown. Leaf spring 75 for fixing the HDU 60 (described later) is shown right before it is mounted to the upper row. The HDU-BOX 10 has prismatic duct portions formed therein by partitions 10c and 10d. The vertical and horizontal gaps with the vertical wall 61a which is a component part of the HDU 60 is about 0 mm to 2 mm in order to allow easy mounting of the HDU 60 to the HDU-BOX and based on the HDU 60 play in the HDU-BOX. A projection 10b is provided at the inner portion of the HDU-BOX 10 to fit therein the base 61c, which is a component member of HDU 60 (see Fig. 10). In addition, on the front portion of the HDU-BOX 10, there is provided a square hole 10e at the upper and lower levels for removably mounting the leaf spring 75 having a predetermined flexibility, the leaf spring pressing the base 61c to projection 10b.

The HDU 60 is mounted to the HDU-BOX 10 by inserting the HDU 60 into the HDU-BOX 10 and then fitting the leaf spring 75 into the square hole 10e.

Such a structure allows smooth insertion of the HDU 60 into the HDU-BOX 10, without the use of fixing screws. Within the range the leaf spring 75 can be bended, the HDU 60 slides slightly in the HDU-BOX 10 when it experiences outside vibration such as earthquakes, which gives rise to the dumping mass effect.

Figs. 12 and 13 are each perspective views for illustrating the mounting of the HDU-BOX 10 to the frame 9. Fig. 13 illustrates the rear portion of the mounted HDU-BOX 10, while Fig. 12 illustrates the front portion of the mounted HDU-BOX 10.

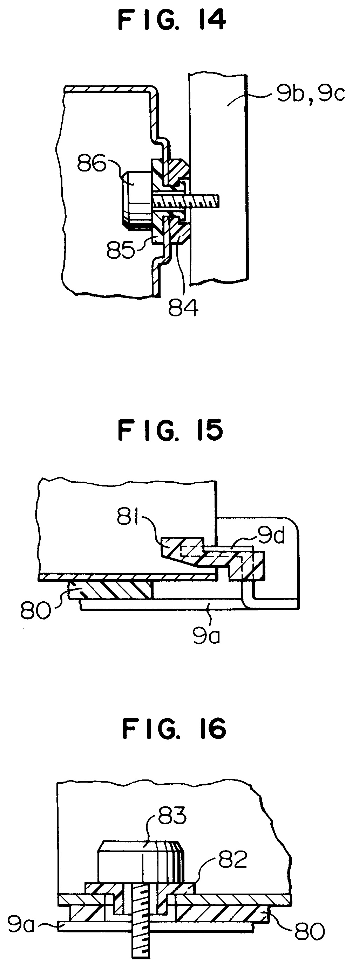

Figs. 14, 15, and 16 are each partial cross sectional views for illustrating the mounting of the HDU-BOX 10 into the frame 9. Fig. 14 is a cross sectional view taken along the line XIV-XIV; Fig. 15 along the line XV-XV; and Fig. 16 along the line XVI-XVI.

As shown in Figs. 15 and 16, a plastic sheet 80 is previously mounted on a rail 9a for mounting the HDU-BOX 10 to the frame 9, the plastic sheet 80 electrically insulating the frame 9 and the HDU-BOX 10.

As shown in Fig. 15, a plastic cap 81 is also provided for the same purpose for the projection 9d of the rail for mounting the HDU-BOX 10 to the frame 9.

On the other hand, as shown in Fig. 14, the HDU-BOX 10 has a plastic bush 84 and a plastic sleeve 85 fitted together.

The HDU-BOX 10 inserted into the frame 9 is inserted into the foregoing rail projection 9d. It is fixed at a total of four places with screws 83 and 86 by means of a plastic washer 82 at two places, as shown in fig. 16, and, as shown in Fig. 14, by means of square pipes 9b and 9c at the remaining two places, respectively.

With the above-described construction, the HDU-BOX 10 is reliably fixed into the frame 9, while they are electrically insulated.

Fig. 17 is an additional DKU 90 consisting of an HDU-BOX 10 and a power source 11.

As shown in Fig. 17, in the unit in accordance with the present invention, one to eight DKU 90 units can be arbitrarily fitted into the frame 9, with the storage capacity necessary in relation to the addition of DKU easily provided.

Fig. 18 is a perspective view for illustrating the connection of the supply cable to the HDU-BOX 10 from the power source 11. The supply cable 11a which extends from the power source 11 rotatably mounted to the square pipe 9e of the frame 9 separates into four connectors at its tip, each of which are connected to the four electronic circuit portion 13 connectors in the HDU-BOX 10. With this is completed the connection of the supply cable from the power source 11 to the HDU-BOX 10.

Area is made available for the previous procedures as well as for the assembly of the rotatably mounted power source at each of the connector sections of the electronic circuit portion 13, and for its maintenance. A voltage/frequency switching connector 95 is previously provided as a structural part at the cable duct 35 where the additional DKU 90 is expected to be installed. As a result, it is made operable by inserting the switching connector 95 into a connector 11b at the predetermined location of the power source 11, when the additional DKU 90 is installed, with the result that one type of additional DKU is capable of dealing with various voltages/frequencies.

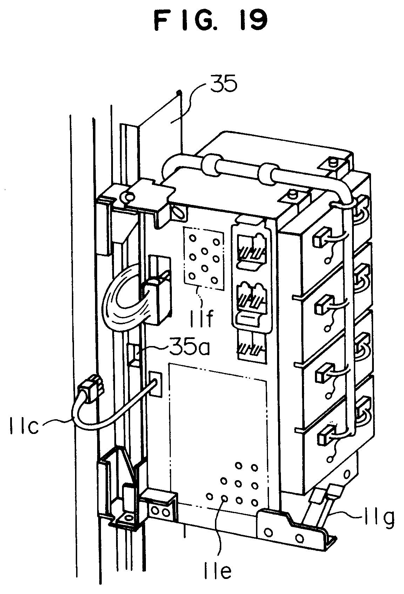

Fig. 19 is a perspective view for illustrating the connection of a supply cable from the apparatus to the power source 90. The supply connector is previously provided at the cable duct 35 where the additional DKU 90 is expected to be installed. Inserting the supply cable 11c from the power source 11 causes the unit to operate. The power source 11 has a rotating lock lever 11g, which can be accommodated in place during general use by fitting it into the square pipe 9f of the frame 9. The power source 11 is internally cooled by the cooling air 71 described in Figs. 3 and 9 which enters from a small hole 11d for cooling, the hole being formed in the outer wall of the power source, and goes out through 11e and 11f.

Figs. 20 and 21 are each perspective views for illustrating connection of a data transmission cable. Of the DKUs which can be installed in four levels, Fig. 21 shows the lowest level, while Fig. 20 shows levels 2 trough 4. Here, the level in Fig. 21 is defined as level 2, with the operations carried out for level 2 also carried out for levels 3 and 4.

The DKU in the HDU-BOX 10 has mounted thereto a continuous data transmission cable 10h, in which one of its connectors is denoted 10f and the other denoted 10g. The four connectors which originate from the foregoing cable 10h are respectively connected to each of the connectors of the four electronic circuit portions 13. In Fig. 21, a data transmission cable connector 35 is previously connected at the first level of the cable duct 35 where the additional DKU 90 is to be installed, with a terminal resistance 100 connected to this cable connector 35b.

The connection of the data transmission cable is completed by connecting one of the connectors 10f to the connector 35b from which the terminal resistance has been removed, and then inserting the foregoing terminal resistance 100 into the other connector 10g.

Next, in the additional DKU 90 of the second level of Fig. 21, the connection is completed by connecting one of the connectors 10f of the additional DKU 90 of the second level to the other connector 10g of the additional DKU 90 of the first level from which the terminal resistance has been removed, and then inserting the terminal resistance 100 to the other connector 10g of the additional DKU 90 of the second level.

A power source control cable 10i, which is provided in the additional DKU 90, separates into four connectors in the additional DKU 90, each of which are connected to the connectors of the four electronic circuit portions 13. A power source control connector 35c is previously provided at the cable duck 35 where the additional DKU 90 is to be installed. Inserting the foregoing power source control cable 10i into the connector 35c causes the DKU to operate.

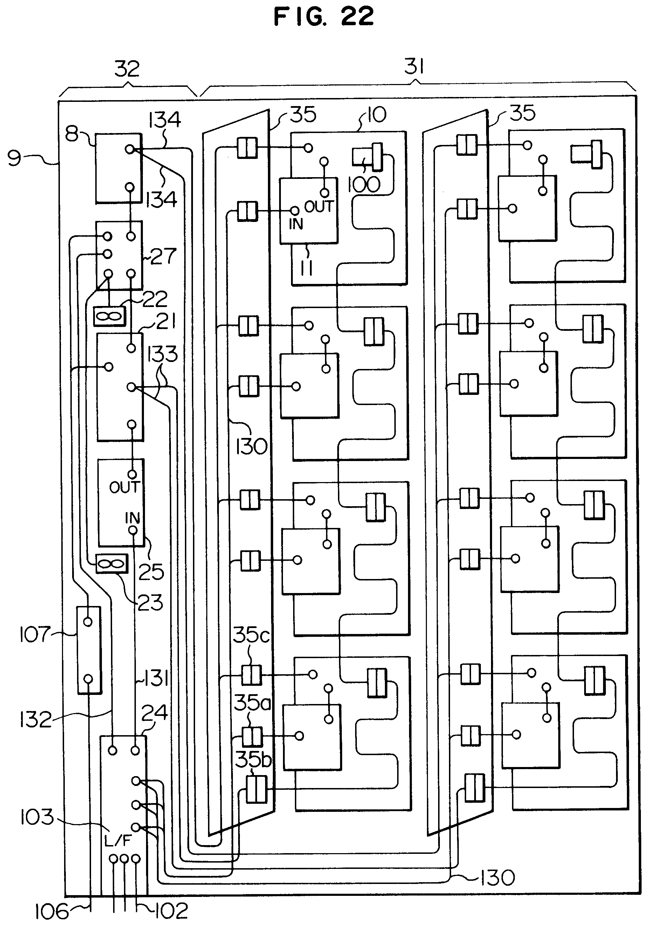

Fig. 22 illustrates the main wirings of the unit of the present invention.

All the wirings are mounted on one frame 9. An AC source cable 102 which extends from the lower portion of the string controller section 32 is connected to a line filter 103 in a main power source 24, in which one set is distributed to the power source 11 by the AC power source cable 130 via the cable duct 35, and the other set, after alternating current has been converted to direct current, supplies power to a DC converted power source 25 for supplying power to a control circuit section 21 and a power source control substrate 27 for controlling the power source of the drive section 31 by means of cables 131 and 132.

In addition to the AC power cables 102, a control interface cable 106 extending from the host unit of spring controller is distributed from the lower portion of the string control section 32. This control interface cable enters an interface panel 107, and is further input to the control circuit section 21.

Output lines 133 extending from the control circuit section 21 are connected to the connector 35b via the cable duct 35, which are connected to all of the HDU 60s by carrying out the procedures illustrated in Figs. 20 and 21. Power control cables 134 are connected from the power control substrate 27 via the display panel 26 to the connector 35c of the cable duct 35, which are connected to all of the HDU 60s by the procedures illustrated in Figs. 20 and 21.

As described above, all the cables, excluding the cables mounted in the additional DKU 90 in the drive section 31, are assembled into a unit at the cable duct 35 installed vertically as shown in Figs. 22 and 4. Accordingly, wiring can be carried out very easily, with incorrect wiring taking place very infrequently during assembly.

According to the present invention, efficient cooling and installation of a large number of HDAs of 32 (4 HDU x 8 HDU-BOX = 32) per unit are achieved. This is made possible by installing four HDUs (each having an HDA and electronic circuit portion as a set) into an assembly, each of which are independently inserted into an HDU-BOX having partitions therein.

Installation of the power source at the downstream of the cooling air path in the HDU-BOX allows the HDA, electronic circuit portion and the cooling fan to be shared, thereby reducing costs.

Any number of additional DKUs from one to eight units may be added, the DKU structure including an HDU-BOX and a power source, and a simple construction makes it easier to install the additional DKU. As a result, the required storage capacity may be easily provided.

In addition, the voltage/frequency switching connector for the power source for the additional DKU is made a component part of the unit. Therefore, one type of additional DKU is capable of dealing with all voltages/frequencies, which results in rationalized production control and simplified shipping unit control.

Since the cable in the magnetic disk apparatus connected to the additional DKU is formed into a unit at the cable duct, incorrect wiring is infrequent during assembly, and wiring can be carried out very easily.

## Claims

1. A magnetic disk apparatus including head disk assembly (hereinafter referred to as HDA) units (60), said HDA unit (60) comprising,
a HDA (12) having a magnetic disk (41) rotatably supported around a spindle (42), a magnetic head (43) for recording data on said magnetic disk (41) and reading out data from said magnetic disk (41), a head arm (44) which supports said magnetic head (43), means (46, 47) which moves said head arm to a predetermined position on said magnetic disk (41), magnetic circuit (49, 50) which drives said means (46, 47), and a motor (40) which rotates said spindle,
an electronic circuit portion (13) which controls said HDA (12), and
a cooling fan (14) which cools said HDA (12) and said electronic circuit portion (13),
wherein said HDA unit (60) is separated by a wall (61a) having an opening, with said HDA (12) and said electronic circuit portion (13) mounted on one side of said wall (61a), and said fan (14) mounted on the other side of the wall surface; and
wherein said magnetic disk apparatus is provided with a plurality of separate frames (10), one of the frames (10) accommodating two or more of said HDA units (60).

2. A magnetic disk apparatus according to claim 1, wherein four HDA units (60) are accommodated in one frame (10).

3. A magnetic disk apparatus according to claim 1, wherein said one frame (10) has partitions (10c, 10d) which provide separate prismatic compartments for two or more said HDA units (60).

4. A magnetic disk apparatus according to claim 3, wherein there is a dimensional gap of about 0 to 2 mm between the outer side of said HDA units (60) and the inner side of an air current path (71a-e), which is provided separately for each HDA unit (60) in one of said frames (10).

5. A magnetic disk apparatus according to claim 3, wherein said HDA unit (60) is displaceably supported by providing a projection for fitting a portion of the bottom surface of said HDA unit onto the surface of said one frame which faces the bottom surface of said HDA unit, and providing a hole for inserting a leaf spring for installing said HDA unit to said one frame.

6. A magnetic disk apparatus according to claim 1, wherein the frames (10) which form compartments are made of iron or magnetic material.

7. A magnetic disk apparatus according to claim 1, wherein said one frame (10) is reinforced by drawing and tight-bending the circumference of the outer wall.

8. A magnetic disk apparatus according to claim 1, wherein said one frame, which accommodates said two or more HDA units, is fitted to a main frame (9) with sheets, screws, washers, and other fixing parts made of insulation materials.

9. A magnetic disk apparatus according to claim 1, wherein an electric power source (11) which supplies power to said HDA unit, accommodated in said one frame (10), is placed at the downstream of the air flow path, where it is cooled.

10. A magnetic disk apparatus according to claim 1, wherein said power source, at a position of the direction of the height corresponding to said one frame, is provided on the main frame in a rotatable hinged structure, the main frame supporting said one frame, with said power source provided with a member which locks the rotation.

11. A magnetic disk apparatus according to claim 10, wherein additional DKUs, each of which includes said frame and said power source as one set, are successively incorporated in said frames at the previously provided plurality of locations where the additional DKUs are to be installed from bottom to top in the direction of the height.

12. A magnetic disk apparatus according to claim 11, wherein the cables to be connected to said additional DKU are distributed vertically and formed into a bundle, which are supported by a duct.

13. A magnetic disk apparatus according to claim 11, wherein connecting parts of the power sources for said additional DKU are previously provided at the frames where said power sources are to be installed.

14. A magnetic disk unit according to claim 13, wherein the connecting parts of the power sources of said additional DKU are switching connectors for switching voltages/frequencies of a transformer in each said power source.

15. A magnetic disk apparatus according to claim 13, wherein the connecting parts of the power sources of said additional DKU are connectors for supplying power from the main power source to the power source of said additional DKU.

16. A magnetic disk apparatus according to claim 1, wherein connecting parts of data transmission of said additional DKU are previously mounted to the main frame supporting said one frame where the additional DKU is to be installed.

17. A magnetic disk apparatus according to claim 16, wherein there are at least two connecting parts of data transmission for said additional DKU.

18. A magnetic disk additional according to claim 16, wherein the cables to be connected to said additional DKUs are vertically distributed and formed into a bundle, the bundle being supported by the duct.

19. A magnetic disk apparatus according to claim 18, wherein said duct is made of metal or resinous material.
